# EUROPEAN PATENT SPECIFICATION

(11) **EP 2 619 519 B1**
(45) Date of publication and mention of the grant of the patent: **24.04.2019**
(21) Application number: 11776880.4
(22) Date of filing: 21.09.2011
(51) Int. Cl.: C21C 5/30, C21C 5/40, C21C 5/52, C21C 5/56, F23J 15/00, F27B 3/08, F27B 3/10, F28F 13/08, F28F 27/02, F28F 9/02, F27D 17/00, F28D 1/03, F28D 9/00

(54) **HEAT EXCHANGER FOR THE RAPID COOLING OF FLUE GAS OF IRONWORK PLANTS, APPARATUS FOR THE TREATMENT OF FLUE GAS IN IRONWORK PLANTS COMPRISING SUCH A HEAT EXCHANGER AND RELATIVE TREATMENT METHOD**
WÄRMETAUSCHER FÜR DIE RASCHE KÜHLUNG VON RAUCHGAS AUS EISENWERKEN, VORRICHTUNG ZUR BEHANDLUNG VON RAUCHGAS IN EISENWERKEN MIT EINEM DERARTIGEN WÄRMETAUSCHER UND ZUGEHÖRIGES BEHANDLUNGSVERFAHREN
ÉCHANGEUR DE CHALEUR POUR LE REFROIDISSEMENT RAPIDE DES GAZ BRÛLÉS DES USINES SIDÉRURGIQUES, APPAREIL DE TRAITEMENT DES GAZ BRÛLÉS DANS LES USINES SIDÉRURGIQUES COMPRENANT LEDIT ÉCHANGEUR DE CHALEUR ET PROCÉDÉ DE TRAITEMENT CORRESPONDANT

(30) Priority: 23.09.2010 IT MI20101734
(43) Date of publication of application: 31.07.2013
(73) Proprietor: Tenova S.p.A., 20149 Milano (IT)
(72) Inventor: MONTI, Nicola, Ambrogio, Maria, I-20149 Milano (IT)
(74) Representative: Cosenza, Simona
(86) International application number: PCT/IB2011/054145
(87) International publication number: WO 2012/038906

(56) References cited:
- WO-A1-03/011418
- WO-A1-2005/083130
- CH-A1- 699 658
- CN-A- 101 274 212
- DE-A1-102009 043 064
- US-A- 5 968 312

## Description

The present invention refers to a heat exchanger for the rapid cooling of flue gas of ironwork plants.

The present invention also refers to an apparatus for the treatment of flue gas of ironwork plants comprising such a heat exchanger and relative treatment method.

With specific reference to ironwork plants and, in particular, to steelworks plants, it is known that they emit great quantities of flue gas at temperatures that vary between 1500-1800°C (at the outlet of electrical furnaces) and 800-900°C (at the outlet of afterburners or preheating systems of the feed material), wherein both dusts containing oxides, metals and metal oxides (Fe, CaO, Al₂O₃, SiO₂, MnO, Zn, Cu, Cr, Ni, etc.), and polluting substances, such as for example the products of combustion of polymeric organic substances present in the feed material are present.

The regulations applicable in various countries impose strict restrictions on the temperature and composition of emissions into the atmosphere, to satisfy which the flue gas must be subjected to cooling and reduction treatments that have a great impact on the running costs of the plants.

In order to limit the economic impact of such treatments, for a long time technologies have been developed aimed at recovering both the heat of the flue gas, and the dusts therein contained.

With regard to the dusts, once they have been separated from the flue gas in suitable dust remover apparatuses, they are subjected to recovery treatments of the reusable substances therein present, including, in particular, metals such as Fe, Zn, Pb, Cr and others. Such treatments are known and well-established and are based on pyro-metallurgy or pyro- hydrometallurgy processes.

With regard to the heat of the flue gas, it is, for example, used to preheat the feed material of the electrical furnaces or air used as comburent in postcombustion processes of the flue gas itself or as an energy source for steam production.

Technologies of this type are for example described in WO2005/083130 and in US4,655,436.

An aspect that concerns in particular ironworks flue gas and, even more specifically, steelworks flue gas is the presence in it of dioxin and/or furans, by such terms intending to indicate the entire "toxicological" class of dioxins, dioxin-like substances and furans and/or their precursors.

The presence of such substances is due, mainly, to the use of raw materials containing polymeric organic substances, in particular chlorinated substances, as feed material of furnaces for the steel production. Such raw materials consist for example of metal scrap wherein, for example, paints, oils, rubbers, plastic materials and the like are present.

It is known that dioxins are eliminated by combustion by keeping the flue gas at temperatures above 800-850°C for a sufficiently long time. However, it is also known that dioxins can reform in the "cold" sections of the flue gas treatment plants. Indeed, if in the flue gas precursors (chlorobenzene and chlorophenols) of dioxin are present, formed by the combustions of polymeric organic substances present in the scrap used as feed material, these precursors, in the temperature range between about 800°C and about 200°C, react forming dioxins in increasingly large quantities the longer they stay in such a temperature range.

The presence in the flue gas of ironwork plants, and in particular in the flue gas of steelwork plants, both of dusts, and of chemical pollutants, including dioxins, furans and/or their precursors, as well as other substances such as acids and salts, makes it problematic to recover the heat contained in the flue gas itself in order to reuse it. On one hand, indeed, the dusts, among which metal oxides, have an abrasive and erosive effect on the surfaces with which they come into contact, to limit which the flow speed of the flue gas is reduced. As the flow speed of the flue gas decreases, however, the separation from it and the depositing of the dusts themselves increase, which, due to their limited heat exchange coefficient, reduce the heat exchange capacity. On the other hand, it is necessary to ensure that the content of polluting, toxic or harmful substances, in particular dioxins and furans present in the flue gas released into the atmosphere, is within the limits set by regulations.

The technologies developed up to now have focussed on the reduction of polluting, toxic or harmful substances. Such technologies are based on chemical, physical and thermal treatments.

A known chemical treatment consists of injecting a suitable chemical agent, for example having the property of inhibiting the formation of such substances or of capturing their precursors, directly in a section of the path followed by the flue gas, as described for example in JP2008-049206 or in JP2007-268372.

The addition of chemical agents into a polluted and dirty environment like that inside the ducts crossed by the flue gas of ironwork plants, the composition of which is also not constant and known a *priori,* can originate unpredictable chemical reactions from which substances different from those foreseen may form, which can be harmful for the environment and/or for the plant itself.

Moreover, the injection of such chemical agents directly into the ducts crossed by the flue gas makes it difficult to ensure their homogeneous distribution. Finally, the dusts and the particulate present in the flue gas tend to intercept and incorporate the injected chemical agents, reducing their effectiveness.

Another known chemical treatment consists of the so-called *scrubbing* of the flue gas through injection of water, nebulised or in rain form, directly in the ducts crossed by the flue gas or in suitable chambers or towers provided along the path followed by the flue gas itself.

An example of a system for scrubbing and simultaneously cooling the flue gas through nebulisation of water directly in the discharge duct of the flue gas is described in GB 1,235,803.

The water introduced into the flow of flue gas dissolves the soluble substances present in it. Such a treatment, however, has limited effectiveness against dioxins and furans due to the low solubility of such compounds in water. The effectiveness increases if activated coke is introduced into the washing fluid.

Such systems also involve the problem of disposing of the waste. Indeed, the harmful substances are actually transferred into the washing fluid that, therefore, must be suitably treated or disposed of.

The effectiveness of the chemical treatments described above (by direct injection of chemical agents or by scrubbing), finally, is limited by the temperature of the flue gas. The greater such a temperature, the greater the possibility that the chemical agent or scrubbing fluid evaporate without performing its action or releasing the particulate captured by it.

Physical treatments are based on the use of filters, in particular active carbon filters. The effectiveness of such filters is, however, linked to the temperature of the flue gas that cross them - the higher the temperature, the less effective the filtration is. Therefore, they require a reduction of the temperature of the entering flue gas as well as at least one pre-filtering or decanting treatment in order to avoid the clogging of the filter itself and, then, its regeneration or replacement.

In order to reduce the temperature of the flue gas to be filtered, as well as that to be subjected to chemical treatment, it is known both mixing it with ambient air, and treating it in a heat exchanger of the radiant type known in the field as a *"hair pin cooler".*

In the case in which the flue gas is mixed with ambient air, there is a disadvantageous increase of the volumes to be treated.

The heat exchangers of the radiant type, on the other hand, are used to reduce the temperature of the flue gas to be treated both through injection of active coke dust into it, and through filtration thereof through an active carbon bed.

They consist of a tube bundle having diameter comprised between 300 mm and 600 mm, length comprised between 8 m and 20 m, arranged outside of the sheds of an ironwork plant where, in addition to the transmission by radiation of the heat from the wall of the duct to the surrounding environment, the ambient air that licks the tubes acts as a cooling fluid. Such a type of cooling does not have constant and repeatable characteristics; one only has to think of the climatic variations that impact on the temperature of the ambient air. In such heat exchangers, moreover, due to the dimensions of the tubes, the flue gas undergoes a strong slowing down that, if on the one hand reduces the abrasive effect that they have on the tubes themselves, on the other hand favours the depositing of dusts, in particular of metal oxides, which then hinder the heat exchange.

Finally, for the specific purpose of hindering the synthesis of dioxins in the "cold" areas of the flue gas treatment plants, it is known to subject them to the so-called quenching.

Currently, quenching is carried out with "wet" methods or with "dry" methods.

"Wet" *quenching* methods are totally similar to a washing treatment *(scrubbing)* and consist of nebulising or injecting a cooling fluid, in general water, into the flow of flue gas. Such methods, therefore, have the same drawbacks highlighted above in relation to scrubbing methods, among which, in particular, the production of waste to be treated or disposed of.

"Dry" *quenching* methods are based on blowing air into the flow of flue gas, as described for example in JP2000210522, or on the use of tube bundle heat exchangers, as described for example in CN101274212 or in JP59112197. Document CH 699 658 A1 further discloses a heat exchanger according to the preamble of claim 1.

In tube bundle heat exchangers, however, deposits and encrustations of dusts easily and frequently form that, on the one hand, reduce the heat exchange efficiency and, therefore, the drasticness of the temperature reduction required for effective *quenching,* and that, on the other hand, clog the tubes hindering the flow of flue gas.

In order to avoid such drawbacks a high number of tubes is generally provided, so as to compensate the reduction in flow speed and in heat exchange that can generate during the operation of exchangers of this kind.

In any case, such heat exchangers require cleaning interventions that can only be carried out during a plant stop time and that are made complex and laborious by the presence of numerous tubes.

The purpose of the present invention is to avoid the drawbacks of the prior art described above.

In particular, a purpose of the present invention is to provide a heat exchanger for the rapid cooling of flue gas of ironwork plants that allows the temperature of such flue gas to be quickly and drastically reduced in order to control the synthesis of dioxins and/or furans, so as to respect the limits of their concentrations set by the standards relative to atmospheric emissions.

A further purpose of the present invention is to provide a heat exchanger for the rapid cooling of flue gas of ironwork plants which is structurally and constructively simple and that allows maintenance or cleaning interventions to be carried out easily, even without requiring the plant to be shut off.

Yet another purpose of the present finding is to provide a heat exchanger for the rapid cooling of flue gas of ironwork plants that allows the heat subtracted to the flue gas crossing it to be recovered.

Yet another purpose of the present invention is to provide an apparatus for the treatment of flue gas of ironwork plants and relative treatment method that allow the temperature of the flue gas to be quickly and drastically reduced in order to control the synthesis of dioxins and/or furans, so as to respect the limits of their concentrations set by the standards, and that allow the heat extracted from the flue gas itself to be efficiently recovered.

Another purpose of the present invention is to realize a heat exchanger for the rapid cooling of flue gas of ironwork plants and an apparatus for the treatment of flue gas of ironwork plants that are particularly simple and functional, with low costs.

These purposes according to the present invention are accomplished by realizing a heat exchanger for the rapid cooling of flue gas of ironwork plants, characterized in that it comprises a support structure of at least one module which in turn comprises an inlet manifold of the flue gas and an outlet manifold of the flue gas which are mutually opposed and aligned, a plurality of panels that extend between said inlet manifold and said outlet manifold and which are mutually superimposed at a defined distance one from the other, wherein pairs of adjacent panels define flow channels of said flue gas which are closed laterally by shoulders and which have at the opposite ends respectively an inlet aperture in communication with said inlet manifold and an outlet aperture in communication with said outlet manifold, and circulation ducts of a cooling fluid associated with said panels.

In a preferred embodiment the pairs of panels, i.e. the flow channels of the flue gas, alternate with hollow spaces defined between the panels themselves.

In a further preferred embodiment two lateral shoulders are provided that close the opposite sides of all flow channels of the flue gas. Alternatively, each channel is laterally closed by a respective pair of shoulders. In any case, the shoulders, be they such as to simultaneously close all of the channels or each channel individually, are of the removable type, so as to allow easy access into the channels themselves to carry out cleaning and maintenance interventions.

In a preferred embodiment first simultaneous or selective closing means of the inlet apertures of the flow channels of the flue gas are provided and possibly also second simultaneous or selective closing means of the outlet apertures of the channels themselves.

In a further preferred embodiment each flow channel of the flue gas is laterally closed by respective removable shoulders and first and second selective closing means of the inlet and outlet apertures of the channels themselves are provided. Such a configuration permits to exclude a channel from the flow of the flue gas both to be able to intervene on it with maintenance and cleaning operations, and to tackle a reduction of the volumes of flue gas to be treated, whilst still keeping the others operative.

In a further preferred embodiment two modules in series are provided, with the respective channels aligned on the vertical.

The transversal section of the flow channels of the flue gas can decrease starting from their inlet aperture towards their outlet aperture, this is in order to compensate for the reduction in volume undergone by the flue gas as it progressively cools and to maintain a high flow speed.

Also forming the object of the present invention is an apparatus for the treatment of flue gas of ironwork plants, comprising a group for capturing the flue gas exiting from an electric arc furnace or from a converter, a pre-treating group of the captured flue gas, a heat exchanger as defined above and the inlet manifold of which is connected to the outlet of said pre-treating group and the outlet manifold of which is connected to an intake group of the flue gas, a post-treatment group of the flue gas exiting from said exchanger, a cooling fluid circuit that operates in said exchanger, wherein along said circuit a cooling group of the cooling fluid exiting from said exchanger is placed, with a recovery of the heat subtracted to said cooling fluid for the production of energy or of a warm service fluid.

Also forming the object of the present invention is a method for treating flue gas of ironwork plants, comprising the steps consisting of:
- capturing the flue gas exiting from an electric arc furnace or from a converter at a temperature comprised between 500°C and 1800°C;
- pre-treating the captured flue gas in a pre-treating group so as to obtain flue gas exiting from this latter at a temperature near to 800-900°C;
- letting the pre-treated flue gas pass through a heat exchanger by reducing their temperature to a value near to 200°C with an average quenching speed greater than or equal to 300°C/sec, preferably 350°C/sec and even more preferably 400°C/sec, transferring the heat subtracted from said flue gas to a cooling fluid;
- recovering the heat transferred to said cooling fluid for the production of energy or of a warm service fluid.

The cooling step of the flue gas takes place in a heat exchanger object of the present invention, which is passed through by the flue gas with an average flow speed greater than or equal to 15m/s and permits to rapidly and drastically reduce the temperature of the flue gas roughly from 800-900°C to 200°C controlling the synthesis of dioxins and furans.

The cooling fluid is diathermic oil and the heat subtracted by it from the flue gas is recovered to produce energy, in particular electrical energy, or a warm service fluid, such as steam or hot water, or used itself as a vector fluid.

The characteristics and advantages of the present invention will become clearer from the following description, exemplifying and not limiting, referring to the attached schematic drawings, wherein:
figure 1 is a schematic top side section of a heat exchanger according to the present invention;
figures 2 and 3 schematically and with an enlarged scale, show the end details of the exchanger of figure 1;
figure 4 schematically and with an enlarged scale, shows a detail of figure 3;
figure 5 is a schematic axonometric view of the exchanger of figure 1 without the support structure;
figure 6 is a schematic section according to the plane VI-VI of figure 5;
figure 7 schematically shows a partially sectioned view of an end detail of figure 5;
figure 8 schematically shows an exploded view of a portion of a flow channel of flue gas of the exchanger according to the present invention;
figure 9 is a schematic section according to the plane IX-IX of a panel of the exchanger according to the present invention;
figure 10 schematically shows the ducts inside the panel of figure 9;
figure 11 schematically shows an overall view of the channel portion of figure 8;
figures 12 and 13 schematically show two different embodiments of the heat exchanger object of the present invention;
figure 14 shows the diagram of an apparatus for the treatment of flue gas of ironwork plants according to the present invention.

With reference to the figures, a heat exchanger for the rapid cooling of flue gas of ironwork plants is shown, wholly indicated with 1.

The heat exchanger 1 comprises a support structure 2 of at least one module 100 which in turn comprises an inlet manifold 3 of the flue gas and an outlet manifold 4 of the flue gas which are mutually opposed and aligned.

Between the inlet manifold 3 and the outlet manifold 4 a plurality of panels 5 extend, which are mutually superimposed at a defined distance one from the other.

Pairs of adjacent panels 5 define flow channels 6 of the flue gas, channels 6 which are closed laterally by shoulders 7 and have at opposite ends respectively an inlet aperture 8 in communication with the inlet manifold 3 and an outlet aperture 9 in communication with the outlet manifold 4.

The panels 5 have circulations ducts 10 of a cooling fluid, advantageously diathermic oil, associated with them.

The pairs of panels 5 alternate with hollow spaces 11 defined between the panels themselves.

Between the inlet manifold 3 and the inlet apertures 8 of the channels 6 distribution means 12 of the flue gas entering the channels themselves are interposed.

Similarly, between the outlet apertures 9 of the channels 6 and the outlet manifold 4 conveyor means 13 of the cooled flue gas exiting towards the outlet manifold itself are interposed.

First simultaneous or selective closing means 14 of the inlet apertures 8 of the channels 6 and second simultaneous or selective closing means 15 of the outlet apertures 9 of the channels 6 are moreover provided.

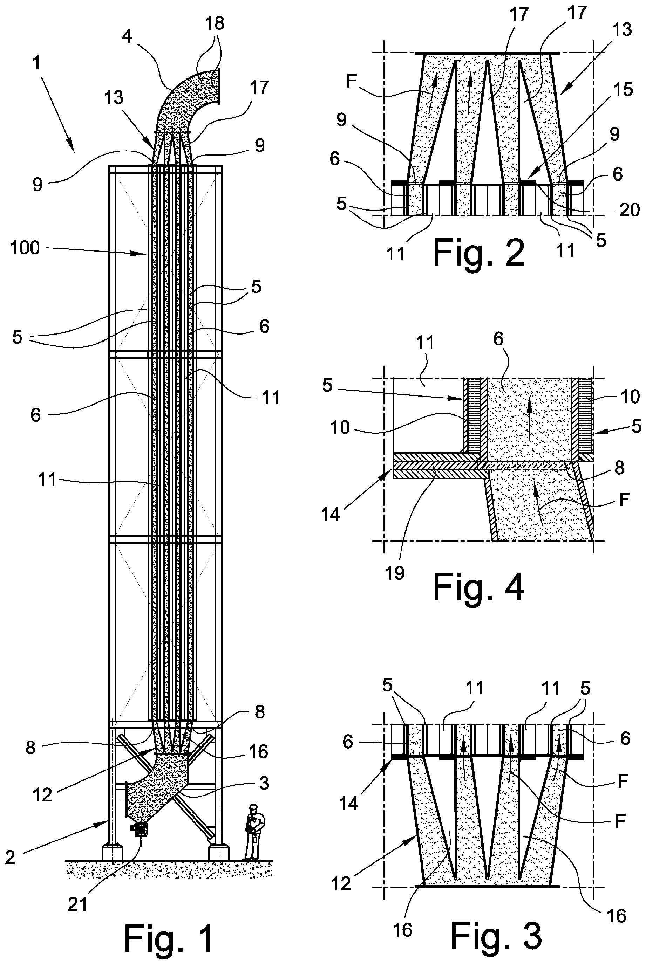

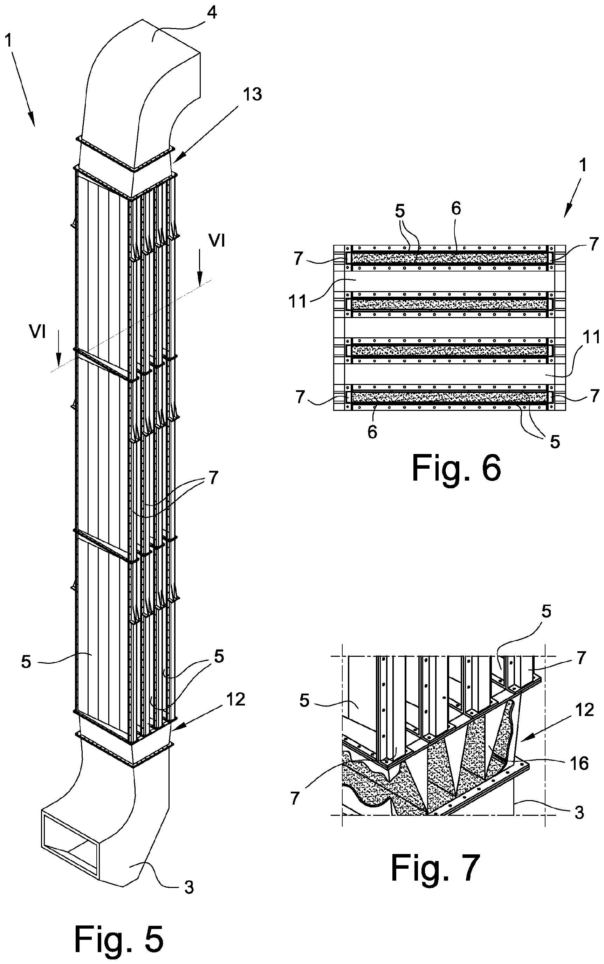

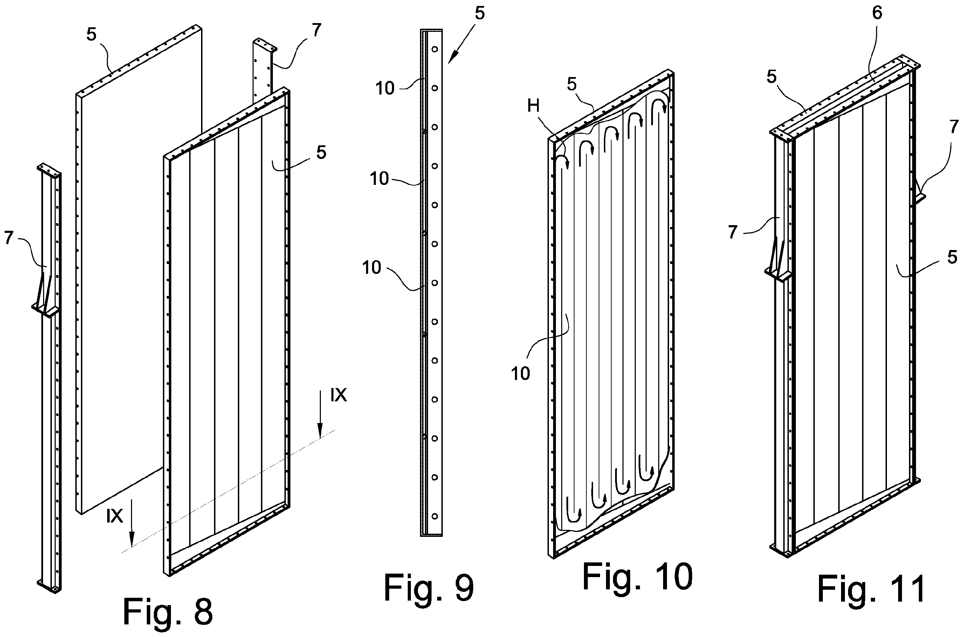

With particular reference to figures 8-10, each channel 6 is delimited by two panels 5, which can be realized from modules assembled together. In figures 8-11 just one of such modules is shown, which, therefore, forms a portion of the panels 5, whereas in figures 1, 5, 12 and 13 panels 5 consisting of many assembled modules are shown.

Each panel 5 is realized in thermally conductive material. Inside each panel 5 the circulation ducts 10 of the cooling fluid are present. The flow of cooling fluid can be in counter-current or in equi-current with respect to the flow of flue gas. The man skilled in the art well understands that the number, arrangement, dimensions and shape of realization of the ducts 10 can vary according to different design conditions and that the flow indicated in figure 10 is purely indicative and not limiting.

The face of the panels 5 destined to define the inner surface of the channels 6 is flat and smooth, i.e. without roughness, so as to reduce the risk of abrasion thereof by the dusts present in the flue gas.

In a preferred embodiment, each channel 6 defined between a pair of panels 5 is closed laterally by a respective pair of shoulders 7 at least one of which is of the removable type; preferably each channel 6 defined between a pair of panels 5 is closed laterally by a respective pair of shoulders 7 both of the removable type.

In an alternative embodiment, not depicted, a single pair of shoulders is provided, also of the removable type, which close the opposite sides of all channels 6.

In any case, the possibility of removing the lateral closing shoulders 7 allows easy access to the channels 6 so as to be able to carry out cleaning and maintenance interventions.

In the case in which each channel 6 is laterally closed by a respective pair of shoulders 7 it is possible to intervene on a single channel 6 at a time.

The distribution means 12 comprise a plurality of wedge-shaped bodies 16 each of which is arranged so that its base extends between two adjacent panels 5 of two successive channels 6 and its inclined faces extend from the panels 5 themselves as represented in figures 1 and 3.

The wedge-shaped bodies 16 divide the flue gas entering the exchanger 1 among the various channels 6.

Similarly, the conveyor means 13 comprise a plurality of wedge-shaped bodies 17 each of which is arranged so that its base extends between two adjacent panels 5 of two successive channels 6 and its inclined faces extend from the panels 5 themselves as represented in figures 1 and 2.

The wedge-shaped bodies 17 convey the cooled flue gas exiting towards the outlet manifold 4 reducing the possibility of vortexes forming that could increase the abrasive effect of the dusts present in the flue gas.

Inside the outlet manifold 4 flow deviators 18 are also present.

The first closing means 14 of the inlet apertures 8 of the channels 6 can consist of a single suitably shaped mobile plate or of the wedge-shaped bodies 16 themselves that, in such a case, will be mounted in a mobile manner between a configuration wherein their base extends between the adjacent panels 5 of two successive channels 6 and a configuration wherein their base overlaps the inlet aperture 8 of one of such channels 6.

In the embodiment represented in figures 1-3, the first closing means 14 comprise a plurality of sash-type doors 19 each of which is suitable for closing the inlet aperture 8 of a channel 6.

Similarly, the second closing means 15 of the outlet apertures 9 of the channels 6 can consist of a single suitably shaped mobile plate or of the wedge-shaped bodies 17 themselves that, in such a case, will be mounted in a mobile manner between a configuration wherein their base extends between the adjacent panels 5 of two successive channels 6 and a configuration wherein their base sits overlaps the outlet aperture 9 of one of such channels 6.

In the embodiment represented in figures 1-3, the second closing means 15 comprise a plurality of sash-type doors 20 each of which is suitable for closing the outlet aperture 9 of a channel 6.

The man skilled in the art well understands that in the case in which the first and second closing means 14 and 15 allow the inlet and outlet apertures 8, 9 of one or more of the channels 6 to be selectively respectively closed, it is also possible to isolate a single channel 6, whilst still keeping the others active, so as to be able to intervene on it for maintenance and cleaning reasons or to deal with a reduction in volumes of flue gas to be treated.

The provision of first and second closing means 14 and 15 that allows the inlet and outlet apertures 8, 9 of one or more of the channels 6 to be respectively selectively closed, in combination with the provision for each channel 6 of respective lateral shoulders 7, at least one of which and preferably both are of the removable type, permits to isolate and exclude from the operation of the exchanger 1 one or more channels 6 in a selective manner, keeping the remaining ones active, so as to be able to carry out maintenance and cleaning interventions on the channels 6 thus excluded without having to shut off the operation of the entire exchanger 1.

In order to compensate for the reduction in volume undergone by the flue gas due to the cooling and still ensure a high flow speed inside the exchanger 1, a speed which, on average, has a value greater than or equal to 15 m/s, the transversal section of the channels 6 decreases starting from their inlet apertures 8 towards their outlet apertures 9.

In an embodiment, the panels 5 are parallel to one another and the reduction in section of the channels 6 is obtained by progressively reducing the width of the panels 5. For the man skilled in the art it is obvious that the reduction in width of the panels 5 can occur in a graduated discreet manner or continuously.

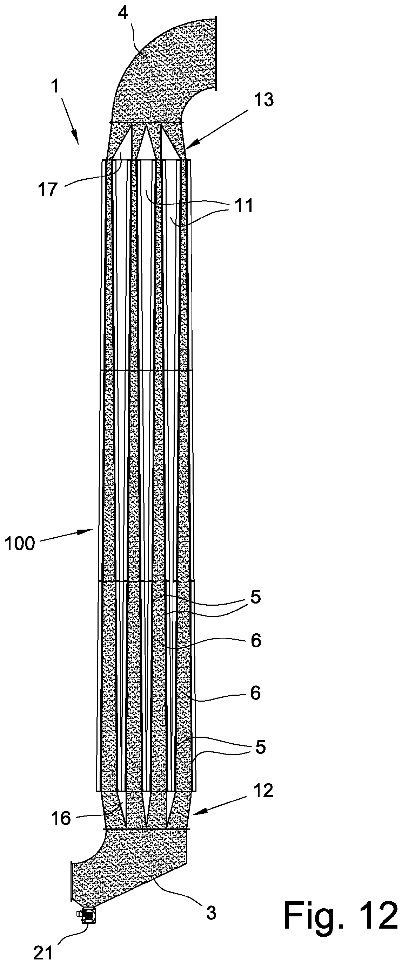

In an alternative embodiment, the panels 5 are arranged mutually inclined converging towards the outlet aperture 9 of each channel 6, as represented in figure 12. Also in this case the reduction in distance between the two panels 5 that delimit a channel 6 can occur continuously or in a graduated discreet manner.

In both cases, the reduction of the transversal section of the channels 6 between their inlet aperture 8 and their outlet aperture 9 is of the order of 50%, being of such an order of magnitude the expected reduction in volume of the flue gas during their cooling.

In the embodiment represented in figures 1-7, the exchanger 1 comprises a single module 100 the inlet and outlet manifolds 3, 4 of which are aligned on the vertical with the inlet manifold 3 at the lower end, where collecting and evacuating means of the dusts that separate from the flue gas are provided, said means consisting for example of a hopper 21.

In such an embodiment, the panels 5 are parallel to one another and have a constant width.

Figure 12 shows an alternative embodiment of the exchanger 1 wherein the channels 6 have a decreasing transversal section towards their outlet aperture 9.

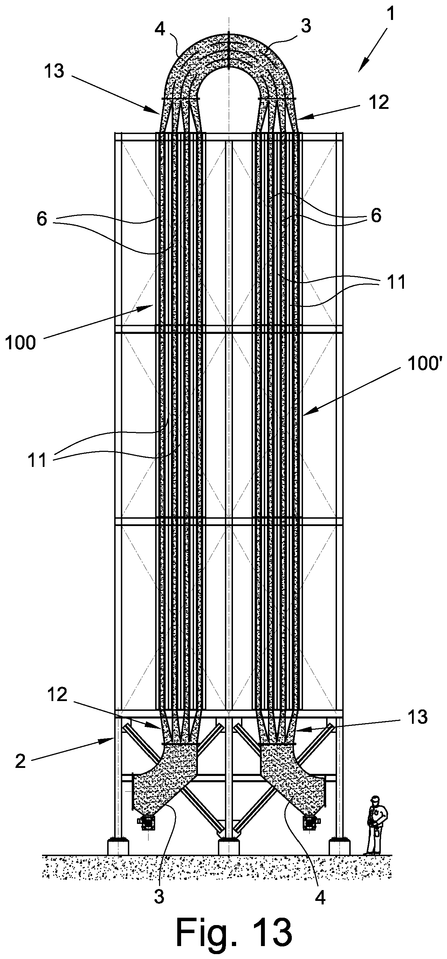

In figure 13 a heat exchanger is represented, which comprises two modules 100, 100' that are arranged side-by-side with the respective inlet and outlet manifolds 3, 4 aligned on the vertical and that are connected together in series with the outlet manifold 4 of the first module 100 joined to the inlet manifold 3 of the second module 100'. The inlet manifold 3 of the first module 100 and the outlet manifold 4 of the second module 100' are arranged at the lower end of the exchanger 1 and each of them is provided with a respective hopper 21.

In order to take into account the reduction in volume of the flue gas as it cools down, the width of the panels 5 of the second module 100' will be less than the width of the panels 5 of the first module 100, alternatively, the number of channels 6 of the second module 100' could be less than the number of channels 6 of the first module 100.

Such a configuration ensures that, even in the case of accidental reduction in flow speed of the flue gas, the dusts or possible solid aggregates present in them separate by gravity and are collected on the bottom of the second module 100'.

For the same overall length of the channels 6, such a configuration permits a reduction in the height of the two modules 100, 100' allowing the exchanger 1 to be installed even in locations wherein there are space limitations in the vertical direction.

In the attached figures the flow of flue gas has been schematised, in an exemplifying and not limiting manner, by the arrows F, whereas that of the cooling fluid has been schematised by the arrows H.

The man skilled in the art well understands that the number of panels 5 and, therefore, of channels 6 can vary according to the requirements of the case, just as the number of modules 100 can vary, connected in series or in parallel. For example, each module 100 can be arranged horizontally, instead of vertically as represented in the attached figures.

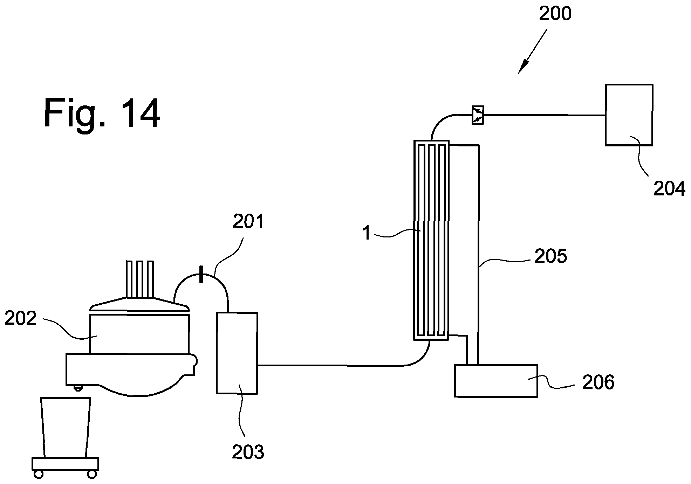

Figure 14 shows a treatment apparatus 200 of flue gas of ironwork plants incorporating the exchanger 1 according to the present invention.

The apparatus 200 comprises a group 201 for capturing the flue gas exiting from an electric arc furnace 202 or from a converter, a pre-treating group 203 of the captured flue gas, a heat exchanger 1 the inlet manifold of which is connected to the outlet of the pre-treating group 203 and the outlet manifold of which is connected to a group for suctioning the flue gas, not schematised, and a post-treatment group 204 of the flue gas exiting from the exchanger 1.

A circuit 205 of the cooling fluid is also provided, which operates in the exchanger 1, wherein along such a circuit 205 a cooling group 206 of the cooling fluid exiting from the exchanger 1 is placed with recovery of the heat subtracted to the cooling fluid for the production of electrical energy or of a warm service fluid.

The pre-treating group 203 comprises an afterburner of the captured flue gas and/or a pre-heating tunnel of the charge for the electric arc furnace 202.

The post-treatment group 204 for example comprises a dust remover or a filter.

The flue gas exiting from the electric arc furnace 202 is captured and conveyed into the pre-treating group 203. When exiting from the electric arc furnace 202 the flue gas has a temperature comprised between 500°C and 1800°C.

In the pre-treating group 203, which for example consists of a pre-heating tunnel of the charge for the electric arc furnace, the flue gas gives a fraction of its heat so as to reach an output temperature near to 800-900°C.

The flue gas at 800-900°C enters the exchanger 1 and, thanks to the suction group, passes through it at high speed, of the order of at least 15m/s.

Inside the exchanger 1 the flue gas undergoes a reduction in temperature to a value close to 200°C with average quenching speed greater than or equal to 300°C/sec, preferably 350°C/sec, even more preferably 400°C/sec, transferring heat to the cooling fluid. Possible particulate that separates from the flue gas collects in the hopper 21 of the exchanger 1.

Such rapid and drastic cooling allows the synthesis of dioxins and furans to be controlled or even better prevented.

The heat transferred to the cooling fluid is recovered in the cooling group 206 for the production of energy or of a warm service fluid.

The cooled flue gas exiting from the exchanger 1 is conveyed in a post-treatment group 204 like for example a filtering device.

The heat exchanger object of the present invention has the advantage of permitting a rapid and drastic cooling of the flue gas of ironwork plants with a particularly simple and modular structure that can be easily adapted to existing plants.

The heat exchanger object of the present invention, thanks to the particular structure of the single channels that form it, permits to simply and easily carry out maintenance and cleaning interventions without having to necessarily shut off the plant, thus ensuring continuity of operation thereof.

The heat exchanger object of the present invention, thanks to the possibility of selectively closing the channels of which it consists, permits to ensure the desired reduction in temperature even in the case of a variation of the volumes of flue gas to be treated.

Moreover, the structure and configuration of the individual flow channels of the flue gas, which, in the basic form are delimited by flat panels arranged according to the faces of a parallelepiped, favours the flow itself, reducing the risks of abrasion of the panels themselves.

An apparatus for the treatment of flue gas of ironwork plants according to the present invention has the advantage of recovering the heat subtracted from the flue gas to produce energy or a warm service fluid.

The heat exchanger and the apparatus for the treatment of flue gas of ironwork plants thus conceived can undergo numerous modifications and variants, all of which are covered by the invention; moreover, all of the details can be replaced by technically equivalent elements. In practice, the materials used, as well as the sizes, can be whatever according to the technical requirements.

## Claims

1. Heat exchanger (1) for the rapid cooling of flue gas of ironwork plants, comprising a support structure (2) of at least one module (100) which in turn comprises an inlet manifold (3) of the flue gas and an outlet manifold (4) of the flue gas which are mutually opposed and aligned, a plurality of panels (5) extending between said inlet manifold (3) and said outlet manifold (4) and which are mutually superimposed at a defined distance one from the other, wherein pairs of adjacent panels (5) define flow channels (6) of said flue gas, which are closed laterally by shoulders (7) and which have at opposite ends respectively an inlet aperture (8) in communication with said inlet manifold (3) and an outlet aperture (9) in communication with said outlet manifold (4), circulation ducts (10) of a cooling fluid associated with said panels (5), **characterized in that** it comprises first selective closing means (14) of the inlet apertures (8) of one or more of said channels (6) and second selective closing means (15) of the outlet apertures (9) of one or more of said channels (6), wherein each of said channels (6) is closed laterally by a respective pair of shoulders (7) of which at least one is of the removable type.

2. Heat exchanger (1) according to claim 1, **characterized in that** said pairs of panels (5) alternate with hollow spaces (11) defined between said panels (5).

3. Heat exchanger (1) according to one or more of the previous claims, **characterized in that** each of said shoulders (7) is of the removable type.

4. Heat exchanger (1) according to one or more of the previous claims, **characterized in that** said circulation ducts (10) of a cooling fluid are present inside each of said panels (5).

5. Heat exchanger (1) according to one or more of the previous claims, **characterized in that** between said inlet manifold (3) and the inlet apertures (8) of said channels (6), distribution means (12) of the flue gas entering said channels are interposed, and **in that** between the outlet apertures (9) of said channels (6) and said outlet manifold (4), conveyor means (13) of said flue gas exiting towards said outlet manifold (4) are interposed.

6. Heat exchanger (1) according to claim 5, **characterized in that** said distribution means (12) and/or said conveyor means (13) comprise a plurality of wedge-shaped bodies (16, 17) the base of which extends between adjacent panels (5) of two subsequent channels (6), the inclined faces of which protrude from said panels.

7. Heat exchanger (1) according to claim 6, **characterized in that** said first closing means (14) or said second closing means (15) comprise said wedge-shaped bodies (16, 17) which are movably mounted between a configuration wherein their base extends between adjacent panels (5) of two subsequent channels (6) and a configuration wherein their base overlaps the inlet aperture (8) or the outlet aperture (9) of one of said subsequent channels (6).

8. Heat exchanger (1) according to one or more of the previous claims, **characterized in that** said first closing means (14) and/or said second closing means (15) comprise, for each of said channels (6), respective sash doors (19, 20).

9. Heat exchanger (1) according to one or more of the previous claims, **characterized in that** the transversal section of said channels (6) decreases from said inlet aperture (8) towards said outlet aperture (9).

10. Heat exchanger (1) according to one or more of the previous claims, **characterized in that** said inlet manifold (3) and said outlet manifold (4) are aligned on the vertical and **in that** at the lower end of said exchanger, collecting and evacuating means (21) of the dusts which separate from said flue gas, are provided.

11. Heat exchanger (1) according to one or more of the previous claims, **characterized in that** it comprises at least two of said modules (100, 100') mutually connected in series with the outlet manifold of the first module (100) joined to the inlet manifold of the second module (100').

12. Heat exchanger (1) according to claim 11, **characterized in that** said modules (100, 100') are disposed side by side with their respective inlet and outlet manifolds aligned on the vertical.

13. Heat exchanger (1) according to one or more of the previous claims, **characterized in that** each of said panels (5) has a modular structure.

14. Apparatus (200) for the treatment of flue gas of ironwork plants, comprising a group (201) for capturing the flue gas exiting from an electric arc furnace (202) or from a converter, a group (203) for pre-treating the captured flue gas, a heat exchanger (1) according to one or more of the claims from 1 to 13 the inlet manifold of which is connected to the outlet of said pre-treating group (203) and the outlet manifold of which is connected to a group for suctioning flue gas, a post-treating group (204) of the flue gas exiting from said exchanger (1), a circuit (205) of the cooling fluid working in said exchanger, wherein along said circuit a cooling group (206) of the cooling fluid exiting from said exchanger (1) is placed, with a recovery of the heat subtracted to said cooling fluid.

15. Apparatus (200) according to claim 14, **characterized in that** said pre-treating group (203) comprises an post-combuster of said captured flue gas and/or a tunnel for preheating the charge for an electric arc furnace.

16. Method for treating flue gas of ironwork plants, comprising the steps consisting of:
- capturing the flue gas exiting from an electric arc furnace (202) or from a converter at a temperature comprised between 500°C and 1800°C;
- pre-treating the captured flue gas in a pre-treating group (203) in order to obtain flue gas exiting from this latter at a temperature near to 800-900°C;
- letting the pre-treated flue gas pass through a heat exchanger (1) according to one or more of the claims from 1 to 13 by reducing their temperature at a value near to 200°C with an average quenching speed greater that or equal to 300°C/sec, preferably equal to 350°C/sec and more preferably equal to 400°C/sec, by transferring the heat subtracted to said flue gas to a cooling fluid;
- recovering the heat transferred to said cooling fluid for the production of energy or of a warm service fluid.

17. Method according to claim 16, wherein in said passing-through step the average flow speed of said flue gas is greater than or equal to 15 m/s, preferably comprised between 35 m/s and 50 m/s.

18. Method according to claim 16 or 17, wherein said pre-treatment step comprises letting said flue gas exiting from said electric arc furnace pass in a pre-heating tunnel of the charge of said electric arc furnace, the ones counter-current with the other, wherein inside said tunnel said flue gas transfers a fraction of its heat to said scraps.

## Patentansprüche

1. Wärmetauscher (1) für das schnelle Kühlen von Abgas von Eisenverarbeitungsanlagen, umfassend
einen Trägeraufbau (2) aus zumindest einem Modul (100), das seinerseits einen Einlassverteiler (3) für das Abgas und einen Auslasssammler (4) für das Abgas umfasst, die einander gegenüberliegen und ausgerichtet sind, eine Mehrzahl von Tafeln (5), die sich zwischen dem Einlassverteiler (3) und dem Auslasssammler (4) erstrecken und die gegenseitig unter einer definierten Distanz voneinander überlagert sind, wobei Paare benachbarter Tafeln (5) Strömungskanäle (6) für das Abgas definieren, die seitlich durch Schultern (7) geschlossen sind und an gegenüberliegenden Enden jeweils eine Einlassdurchbrechung (8) in Kommunikation mit dem Einlassverteiler (3) und eine Auslassdurchbrechung (9) in Kommunikation mit dem Auslasssammler (4) aufweisen, und Zirkulationsdurchlässe (10) für ein Kühlfluid, die den Tafeln (5) zugeordnet sind, **dadurch gekennzeichnet, dass** er ein erstes selektives Schließmittel (14) für die Einlassdurchbrechungen (8) von einem oder mehreren der Kanäle (6) und ein zweites selektives Schließmittel (15) der Auslassdurchbrechungen (9) von einem oder mehreren der Kanäle (6) umfasst, wobei jeder der Kanäle (6) seitlich durch ein jeweiliges Paar von Schultern (7) geschlossen ist, von denen zumindest einer vom entfernbaren Typ ist.

2. Wärmetauscher (1) nach Anspruch 1, **dadurch gekennzeichnet, dass** die Paare von Tafeln (5) mit Hohlräumen (11) abwechseln, die zwischen den Tafeln (5) definiert sind.

3. Wärmetauscher (1) nach einem oder mehreren der vorhergehenden Ansprüche, **dadurch gekennzeichnet, dass** jede der Schultern (7) vom entfernbaren Typ ist.

4. Wärmetauscher (1) nach einem oder mehreren der vorhergehenden Ansprüche, **dadurch gekennzeichnet, dass** die Zirkulationskanäle (10) für ein Kühlfluid innerhalb jeder der Tafeln (5) vorhanden sind.

5. Wärmetauscher (1) nach einem oder mehreren der vorhergehenden Ansprüche, **dadurch gekennzeichnet, dass** zwischen dem Einlassverteiler (3) und den Einlassdurchbrechungen (8) der Kanäle (6) ein Verteilungsmittel (12) für das Abgas, das in die Kanäle eintritt, angeordnet ist, und dass zwischen den Auslassdurchbrechungen (9) der Kanäle (6) und dem Auslasssammler (4) ein Fördermittel (13) für das Abgas angeordnet ist, das zu dem Auslasssammler (4) austrägt.

6. Wärmetauscher (1) nach Anspruch 5, **dadurch gekennzeichnet, dass** das Verteilungsmittel (12) und/oder das Fördermittel (13) eine Mehrzahl keilförmiger Körper (16, 17) umfasst, deren Basis sich zwischen benachbarten Tafeln (5) von zwei aufeinanderfolgenden Kanälen (6) erstreckt, deren schräggestellte Seiten von den Tafeln vorragen.

7. Wärmetauscher (1) nach Anspruch 6, **dadurch gekennzeichnet, dass** das erste Schließmittel (14) oder das zweite Schließmittel (15) keilförmige Körper (16, 17) umfassen, die bewegbar zwischen einer Konfiguration, in der sich deren Basis zwischen benachbarten Tafeln (5) von zwei aufeinanderfolgenden Kanälen (6) erstreckt, und einer Konfiguration bewegbar montiert sind, in der deren Basis die Einlassdurchbrechung (8) oder die Auslassdurchbrechung (9) von einem der nachfolgenden Kanäle (6) überlappt.

8. Wärmetauscher (1) nach einem oder mehreren der vorhergehenden Ansprüche, **dadurch gekennzeichnet, dass** das erste Schließmittel (14) und/oder das zweite Schließmittel (15) für jeden der Kanäle (6) jeweilige Flügeltüren (19, 20) umfasst.

9. Wärmetauscher (1) nach einem oder mehreren der vorhergehenden Ansprüche, **dadurch gekennzeichnet, dass** der Querschnitt der Kanäle (6) von der Einlassdurchbrechung (8) zu der Auslassdurchbrechung (9) abnimmt.

10. Wärmetauscher (1) nach einem oder mehreren der vorhergehenden Ansprüche, **dadurch gekennzeichnet, dass** der Einlassverteiler (3) und der Auslasssammler (4) an der Vertikalen ausgerichtet sind und dass an dem unteren Ende des Wärmetauschers ein Sammel- und Evakuierungsmittel (21) der Stäube vorgesehen ist, die von dem Abgas abgeschieden sind.

11. Wärmetauscher (1) nach einem oder mehreren der vorhergehenden Ansprüche, **dadurch gekennzeichnet, dass** er zumindest zwei der Module (100, 100') umfasst, die gegenseitig in Reihe mit dem Auslasssammler des ersten Moduls (100) verbunden sind, der mit dem Einlasssammler des zweiten Moduls (100') verbunden ist.

12. Wärmetauscher (1) nach Anspruch 11, **dadurch gekennzeichnet, dass** die Module (100, 100') Seite an Seite mit ihren jeweiligen Einlassverteilern und Auslasssammlern, die an der Vertikalen ausgerichtet sind, angeordnet sind.

13. Wärmetauscher (1) nach einem oder mehreren der vorhergehenden Ansprüche, **dadurch gekennzeichnet, dass** jede der Tafeln (5) einen modularen Aufbau aufweist.

14. Vorrichtung (200) für die Behandlung von Abgas von Eisenbearbeitungsanlagen, mit einer Gruppe (201) zum Abfangen des Abgases, das von einem elektrischen Lichtbogenofen (202) oder von einem Konverter austritt, einer Gruppe (203) für das Vorbehandeln des abgefangenen Abgases, einen Wärmetauscher (1) nach einem oder mehreren der Ansprüche 1 bis 13, dessen Einlassverteiler mit dem Auslass der Vorbehandlungsgruppe (203) verbunden ist und dessen Auslasssammler mit einer Gruppe zum Saugen von Abgas verbunden ist, eine Nachbehandlungsgruppe (204) für das Abgas, das von dem Wärmetauscher (1) austritt, einen Kreislauf (205) für das Kühlfluid, das in dem Wärmetauscher arbeitet, wobei entlang des Kreislaufs eine Kühlgruppe (206) für das Kühlfluid, das von dem Wärmetauscher (1) austritt, angeordnet ist, wobei eine Wärmerückgewinnung von dem Kühlfluid subtrahiert wird.

15. Vorrichtung (200) nach Anspruch 14, **dadurch gekennzeichnet, dass** die Vorbehandlungsgruppe (203) einen Nachbrenner des abgefangenen Abgases und/oder einen Tunnel zum Vorerhitzen der Ladung für einen elektrischen Lichtbogenofen umfasst.

16. Verfahren zum Behandeln von Abgas an Eisenbearbeitungsanlagen, mit den Schritten, dass:
- das Abgas, das von einem elektrischen Lichtbogenofen (202) oder von einem Konverter austritt, bei einer Temperatur abgefangen wird, die zwischen 500°C und 1800°C umfasst;
- das abgefangene Abgas in einer Vorbehandlungsgruppe (203) vorbehandelt wird, um Abgas, das von diesem austritt, bei einer Temperatur in der Nähe von 800 - 900°C zu erhalten;
- das vorbehandelte Abgas durch einen Wärmetauscher (1) nach einem der Ansprüche 1 bis 13 durch Reduzierung deren Temperatur bei einem Wert nahe 200°C mit einer durchschnittlichen Ablöschgeschwindigkeit von größer als oder gleich 300°C/s, bevorzugt gleich 350°C/s und bevorzugter gleich 400°C/s durch Übertragung der Wärme, die von dem Abgas abgezogen wird, an ein Kühlfluid geführt wird;
- die auf das Kühlfluid für die Erzeugung von Energie übertragene Wärme oder Wärme eines warmen Wartungsfluides rückgewonnen wird.

17. Verfahren nach Anspruch 16, wobei bei dem Durchströmschritt die durchschnittliche Strömungsgeschwindigkeit des Abgases größer als oder gleich 15 m/s ist und bevorzugt zwischen 35 m/s und 50 m/s liegt.

18. Verfahren nach einem der Ansprüche 16 oder 17, wobei der Vorbehandlungsschritt umfasst, dass das Abgas, das von dem elektrischen Lichtbogenofen austritt, in einen Vorheiztunnel der Ladung des elektrischen Lichtbogenofens geführt wird, wobei diese gegenstromig zueinander angeordnet sind, wobei innerhalb des Tunnels das Abgas einen Anteil seiner Wärme auf die Abfälle überträgt.

## Revendications

1. Échangeur de chaleur (1) pour le refroidissement rapide de gaz de combustion d'usines sidérurgiques, comprenant
une structure de support (2) d'au moins un module (100) qui à son tour comprend un collecteur d'admission (3) du gaz de combustion et un collecteur de sortie (4) du gaz de combustion qui sont mutuellement opposés et alignés, une pluralité de panneaux (5) s'étendant entre ledit collecteur d'admission (3) et ledit collecteur de sortie (4) et qui sont mutuellement superposés à une distance définie les uns des autres, des paires de panneaux (5) adjacents définissant des canaux de circulation (6) dudit gaz de combustion, qui sont obturés latéralement par des talons (7) et qui comportent aux extrémités opposées respectivement une ouverture d'admission (8) en communication avec ledit collecteur d'admission (3) et une ouverture de sortie (9) en communication avec ledit collecteur de sortie (4), des conduits de circulation (10) d'un fluide de refroidissement associés auxdits panneaux (5), **caractérisé en ce qu'**il comprend des premiers moyens de fermeture sélectifs (14) des ouvertures d'admission (8) d'un ou de plusieurs desdits canaux (6) et des seconds moyens de fermeture sélectifs (15) des ouvertures de sortie (9) d'un ou de plusieurs desdits canaux (6), chacun desdits canaux (6) étant obturé latéralement par une paire respective de talons (7) dont au moins un est du type amovible.

2. Échangeur de chaleur (1) selon la revendication 1, **caractérisé en ce que** lesdites paires de panneaux (5) alternent avec des espaces creux (11) définis entre lesdits panneaux (5).

3. Échangeur de chaleur (1) selon une ou plusieurs des revendications précédentes, **caractérisé en ce que** chacun desdits talons (7) est du type amovible.

4. Échangeur de chaleur (1) selon une ou plusieurs des revendications précédentes, **caractérisé en ce que** lesdits conduits de circulation (10) d'un fluide de refroidissement sont présents à l'intérieur de chacun desdits panneaux (5).

5. Échangeur de chaleur (1) selon une ou plusieurs des revendications précédentes, **caractérisé en ce qu'**entre ledit collecteur d'admission (3) et les ouvertures d'admission (8) desdits canaux (6) sont intercalés des moyens de distribution (12) du gaz de combustion pénétrant dans lesdits canaux, et **en ce qu'**entre les ouvertures de sortie (9) desdits canaux (6) et ledit collecteur de sortie (4) sont intercalés des moyens d'acheminement (13) dudit gaz de combustion sortant en direction dudit collecteur de sortie (4).

6. Échangeur de chaleur (1) selon la revendication 5, **caractérisé en ce que** lesdits moyens de distribution (12) et/ou lesdits moyen d'acheminement (13) comprennent une pluralité de corps biseautés (16, 17) dont la base s'étend entre des panneaux (5) adjacents de deux canaux (6) successifs, dont les faces inclinées dépassent desdits panneaux.

7. Échangeur de chaleur (1) selon la revendication 6, **caractérisé en ce que** lesdits premiers moyens de fermeture (14) ou lesdits seconds moyens de fermeture (15) comprennent lesdits corps biseautés (16, 17) qui sont montés de façon déplaçable entre une configuration dans laquelle leur base s'étend entre des panneaux (5) adjacents de deux canaux (6) successifs et une configuration dans laquelle leur base recouvre l'ouverture d'admission (8) ou l'ouverture de sortie (9) de l'un desdits canaux (6) successifs.

8. Échangeur de chaleur (1) selon une ou plusieurs des revendications précédentes, **caractérisé en ce que** lesdits premiers moyens de fermeture (14) et/ou lesdits seconds moyens de fermeture (15) comprennent, pour chacun desdits canaux (6), des portes coulissantes (19, 20).

9. Échangeur de chaleur (1) selon une ou plusieurs des revendications précédentes, **caractérisé en ce que** la section transversale desdits canaux (6) diminue de ladite ouverture d'admission (8) vers ladite ouverture de sortie (9).

10. Échangeur de chaleur (1) selon une ou plusieurs des revendications précédentes, **caractérisé en ce que** ledit collecteur d'admission (3) et ledit collecteur de sortie (4) sont alignés sur la verticale et **en ce qu'**à l'extrémité inférieure dudit échangeur sont disposés des moyens de collecte et d'évacuation (21) des poussières qui se séparent dudit gaz de combustion.

11. Échangeur de chaleur (1) selon une ou plusieurs des revendications précédentes, **caractérisé en ce qu'**il comprend au moins deux desdits modules (100, 100') mutuellement reliés en série, le collecteur de sortie du premier module (100) étant joint au collecteur d'admission du deuxième module (100').

12. Échangeur de chaleur (1) selon la revendication 11, **caractérisé en ce que** lesdits modules (100, 100') sont disposés côte à côte avec leurs collecteurs d'admission et de sortie respectifs alignés sur la verticale.

13. Échangeur de chaleur (1) selon une ou plusieurs des revendications précédentes, **caractérisé en ce que** chacun desdits panneau (5) a une structure modulaire.

14. Appareil (200) pour le traitement de gaz de combustion d'usines sidérurgiques, comprenant un groupe (201) destiné à la capture du gaz de combustion sortant d'un four à arc électrique (202) ou d'un convertisseur, un groupe (203) destiné au prétraitement du gaz de combustion capturé, un échangeur de chaleur (1) selon une ou plusieurs des revendications 1 à 13, dont le collecteur d'admission est relié à la sortie dudit groupe de prétraitement (203) et dont le collecteur de sortie est relié à un groupe destiné à aspirer le gaz de combustion, un groupe de post-traitement (204) du gaz de combustion sortant dudit échangeur (1), un circuit (205) du fluide de refroidissement opérant dans ledit échangeur, sur ledit circuit étant placé un groupe de refroidissement (206) du fluide de refroidissement sortant dudit échangeur (1), avec une récupération de la chaleur extraite dudit fluide de refroidissement.

15. Appareil (200) selon la revendication 14, **caractérisé en ce que** ledit groupe de prétraitement (203) comprend une chambre de postcombustion dudit gaz de combustion capturé et/ou un tunnel pour le préchauffage de la charge pour un four à arc électrique.

16. Procédé pour le traitement de gaz de combustion d'usines sidérurgiques, comprenant les étapes consistant à :
- capturer le gaz de combustion sortant d'un four à arc électrique (202) ou d'un convertisseur à une température comprise entre 500 °C et 1 800 °C ;
- prétraiter le gaz de combustion capturé, dans un groupe de prétraitement (203) afin d'obtenir du gaz de combustion sortant de ce dernier à une température voisine de 800-900 °C ;
- faire passer le gaz de combustion prétraité à travers un échangeur de chaleur (1) selon une ou plusieurs des revendications 1 à 13, en abaissant sa température jusqu'à une valeur voisine de 200 °C, à une vitesse moyenne de refroidissement supérieure ou égale à 300 °C/s, de préférence égale à 350 °C/s et de façon plus particulièrement préférée égale à 400 °C/s, par transfert de la chaleur extraite dudit gaz de combustion à un fluide de refroidissement ;
- récupérer la chaleur transférée audit fluide de refroidissement pour la production d'énergie ou d'un fluide de service chaud.

17. Procédé selon la revendication 16, dans lequel dans ladite étape de passage à travers, la vitesse moyenne de circulation dudit gaz de combustion est supérieure ou égale à 15 m/s, de préférence est comprise entre 35 m/s et 50 m/s.

18. Procédé selon la revendication 16 ou 17, dans lequel ladite étape de prétraitement comprend le fait de faire passer ledit gaz de combustion sortant dudit four à arc électrique dans un tunnel de préchauffage de la charge dudit four à arc électrique, l'un à contre-courant de l'autre, à l'intérieur dudit tunnel ledit gaz de combustion transférant une fraction de sa chaleur auxdites ferrailles.
